# EUROPÄISCHE PATENTSCHRIFT

(11) **EP 3 188 629 B1**
(45) Veröffentlichungstag und Bekanntmachung des Hinweises auf die Patenterteilung: **21.11.2018**
(21) Anmeldenummer: 15756936.9
(22) Anmeldetag: 04.09.2015
(51) Int. Cl.: A47J 31/54

(54) **DURCHLAUFERHITZER FÜR HEISSGETRÄNKEZUBEREITUNGSEINRICHTUNG**
INSTANTANEOUS WATER HEATER FOR A HOT BEVERAGE PREPARATION DEVICE
CHAUFFE-EAU RAPIDE POUR UN APPAREIL DE PRÉPARATION DE BOISSONS CHAUDES

(30) Priorität: 05.09.2014 DE 102014217842
(43) Veröffentlichungstag der Anmeldung: 12.07.2017
(73) Patentinhaber: BSH Hausgeräte GmbH, 81739 München (DE)
(72) Erfinder: FISCH, Markus, 84326 Falkenberg (DE); LAMPERSBERGER, Sebastian Anton, 83355 Grabenstätt (DE)
(86) Internationale Anmeldenummer: PCT/EP2015/070228
(87) Internationale Veröffentlichungsnummer: WO 2016/034705

(56) Entgegenhaltungen:
- EP-A1- 0 122 414
- DE-A1- 2 808 182

## Beschreibung

Die Erfindung betrifft einen Durchlauferhitzer für eine Heißgetränkezubereitungseinrichtung für Haushaltszwecke mit einem wärmeleitenden Durchflussrohr, mit mindestens einer an dem Durchflussrohr wärmeleitend verbundenen und parallel verlaufenden, elektrisch betriebenen Heizwendel, mit einem wärmeleitenden Träger, der wärmeleitend über einen Befestigungspunkt an dem Durchflussrohr befestigt ist, und mit einem Temperaturregler und mit einer Schmelzsicherung auf dem Träger, die dort nebeneinander wärmeleitend angebracht sind.

Einen elektrischen Durchlauferhitzer zur Warmwasserbereitung zeigt die DE 28 08 182 A1. Er besteht aus einem innerhalb seines beheizten Bereiches kreis- oder u-förmig gebogenen Rohrheizkörper, einem mit diesem durch Lötungen oder Schweißungen gut wärmeleitend verbundenen, flüssigkeitsdurchströmten Durchflussrohr sowie einer Wärmeleit- und Montageplatte, die sowohl mit dem beheizten Teil des Rohrheizkörpers als auch mit einer Temperatursteuereinrichtung gut wärmeleitend verbunden ist. Seine Wärmeleit- und Montageplatte ist an ihrem äußerem Umfang mit der Scheitelkante des dreieckförmig profilierten Rohrheizkörpers verlötet und verschweißt, während die der Scheitelkante gegenüberliegende Planfläche des Rohrheizkörpers mit Hilfe einer an der Warmhalteplatte fixierten und durch eine Öffnung der Wärmeleit- und Montageplatte hindurchgeführten Spannschraube gegen die Wärmeleitplatte des Durchlauferhitzers gepresst ist. Die Wärmeleit- und Montageplatte ist mit ausgestanzten Lappen versehen, die als Befestigungselemente für die Schmelzsicherung ausgebildet sind.

Aufgabe der Erfindung ist es, einen Durchlauferhitzer hinsichtlich der Montage des Temperaturreglers und der Schmelzsicherung zu vereinfachen.

Diese Aufgabe wird bei einem eingangs genannten Durchlauferhitzer erfindungsgemäß dadurch gelöst, dass der Temperaturregler dem Befestigungspunkt näher angeordnet ist als die Schmelzsicherung und dass der Durchlauferhitzer derart ausgebildet ist, dass im Betrieb der Wärmefluss zum Temperaturregler größer ist als zur Schmelzsicherung. Im Betrieb der Heißgetränkezubereitungseinrichtung soll der Temperaturregler ein Überhitzen der Heizwendeln vermeiden, wenn sie mit Strom beaufschlagt sind, aber kein Wasserfluss stattfindet.

Bei einer vorbestimmten Ansprechtemperatur unterbricht der Temperaturregler die Stromversorgung der Heizwendeln. Bei Ausfall des Temperaturreglers schaltet die Schmelzsicherung die Heizung ab, um Schäden an der Heißgetränkezubereitungseinrichtung zu vermeiden. Die Erfindung geht also davon aus, dass der Temperaturregler und die Schmelzsicherung an zumindest einem gemeinsamen Befestigungspunkt am Durchflussrohr angebunden sind. Der Temperaturregler und die Schmelzsicherung sind derart auf dem Träger angeordnet, dass der Temperaturregler dem Befestigungspunkt näher liegt als die Schmelzsicherung. Gibt es zwei oder mehrere Befestigungspunkte, so hat der Temperaturregler ihnen gegenüber einen geringeren Abstand als die Schmelzsicherung. Soweit bisher und im Folgenden von nur einem Temperaturregler und nur einer Schmelzsicherung die Rede ist, soll darin auch die Möglichkeit mehrerer Temperaturregler und/oder mehrerer Schmelzsicherungen inkludiert sein.

Erfindungsgemäß verfügt der Durchlauferhitzer nun über Mittel, die während seines Betriebs einen Wärmefluss erzeugen, der zum Temperaturregler größer ist als zur Schmelzsicherung. Ein größerer Wärmefluss zum Temperaturregler als zur Schmelzsicherung kann konstruktiv zum Beispiel durch eine geeignete Dimensionierung des Trägers erreicht werden, indem derjenige Trägerabschnitt, auf dem die Schmelzsicherung befestigt ist, über einen langen und/oder schmalen und/oder dünnen Riegel mit demjenigen Trägerabschnitt verbunden ist, auf dem der Temperaturregler befestigt ist. Dadurch gelangt weniger und/oder später Wärme an die Schmelzsicherung als an den Temperaturregler. Alternativ oder zusätzlich kann der geringere Wärmefluss zur Schmelzsicherung durch einen zweiteiligen Träger erreicht werden, dessen erster Teil dem Temperaturregler und dessen zweiter Teil der Schmelzsicherung zugeordnet ist und dessen Material des ersten Teils einen geringeren Wärmedurchgangswiderstand aufweist als das vom Material des ersten Teils abweichende Material des zweiten Teils.

Dies hat zur Folge, dass nach Einschalten des Durchlauferhitzers der Temperaturregler die ansteigende Temperatur im Durchflussrohr früher erfasst als die Schmelzsicherung. Damit ist der Temperaturregler der thermischen Belastung infolge des Betriebs des Durchlauferhitzers früher ausgesetzt als jene. So insbesondere bei einem Trockenhochlauf des Durchlauferhitzers, bei dem die Heizwendel eingeschaltet ist, aber noch kein oder kein Wasserfluss mehr erfolgt. Hier muss der Temperaturregler die Heizung frühzeitig abschalten. Aufgrund des höheren Wärmeflusses zum Temperaturregler und des geringeren Wärmeflusses zur Schmelzsicherung wird der Temperaturüberschwinger der Heizwendel bestenfalls verzögert an die Schmelzsicherung weitergeleitet bzw. ihr gegenüber abgemildert. Sie löst daher bei Aktivierung des Temperaturreglers nicht aus. Ist der Temperaturregler dagegen defekt und muss die Schmelzsicherung die Heizung abschalten, wird beim weiteren Aufheizen die erhöhte Temperatur schließlich auch an die Schmelzsicherung weitergeleitet, wenn auch geringfügig verzögert. Daraufhin schaltet die Schmelzsicherung die Heizung ab, um Schäden an der Heißgetränkezubereitungseinrichtung zu vermeiden. Damit kann eine zuverlässige Funktion des Temperaturreglers einerseits und der Schmelzsicherung andererseits sichergestellt werden, obwohl beide auf demselben Träger und am selben Durchflussrohr montiert sind. Eine separate Montage des Temperaturreglers einerseits und der Schmelzsicherung andererseits aber lässt sich dadurch vermeiden. Die gemeinsame Montage sowohl des Temperaturreglers als auch der Schmelzsicherung auf demselben Träger ermöglicht eine Vorfertigung und kann Montagekosten reduzieren.

Der unterschiedliche Wärmefluss zum Temperaturregler einerseits und zur Schmelzsicherung andererseits geht auf dieselbe "Wärmequelle", nämlich den Befestigungspunkt am Durchlaufrohr zurück. Er kann insbesondere bei einem eingeschwungenen Durchlauferhitzer eine zu geringe Temperaturdifferenz bewirken, die keinen zuverlässigen Schutz der Schmelzsicherung bei intaktem Temperaturregler mehr sicherstellt. Nach einer weiteren vorteilhaften Ausgestaltung der Erfindung kann der Träger daher wärmeleitend über zwei Befestigungspunkte am Durchlaufrohr befestigt sein, wobei der Temperaturregler einem ersten Befestigungspunkt und die Schmelzsicherung einem zweiten Befestigungspunkt näher angeordnet ist und wobei der zweite Befestigungspunkt stromauf des ersten Befestigungspunkts liegt

Erfindungsgemäß kommt es also auf einen unterschiedlichen Wärmefluss vom ersten Befestigungspunkt zum Temperaturregler einerseits und vom zweiten Befestigungspunkt zur Schmelzsicherung andererseits an. Das zu erhitzende und zunächst kalte Wasser, das in das Durchlaufrohr eintritt, hat eingangs des Durchlauferhitzers folglich eine geringere Temperatur als stromab seines Eintrittspunkts. Da der erste Befestigungspunkt stromab des zweiten Befestigungspunkts liegt, an dem das in das Durchflussrohr eingetretene Wasser bereits eine höhere Temperatur erreicht, liegt am ersten Befestigungspunkt prinzipiell eine höhere Temperatur an als am zweiten Befestigungspunkt. Selbst bei gleichem Wärmedurchgangswiederstand zwischen den Befestigungspunkten und dem Temperaturregler bzw. der Schmelzsicherung fließt damit zum selben Zeitpunkt eine höhere Wärmemenge zum Temperaturregler als zur Schmelzsicherung. Der unterschiedliche Wärmefluss wird also durch unterschiedliche Befestigungspunkte als "Wärmequellen" des Temperaturreglers einerseits und der Schmelzsicherung andererseits am Durchlauferhitzer erreicht. Sie sind dort positionsabhängig.

Der unterschiedliche Wärmefluss kann nach einer weiteren vorteilhaften Ausgestaltung der Erfindung dadurch verstärkt werden, dass der zweite Befestigungspunkt im Bereich oder stromauf eines Beginns der Heizwendel am Durchflussrohr liegt. Dort befindet er sich in einem nicht unmittelbar beheizten Bereich des Durchflussrohrs. Da der erste Befestigungspunkt allerdings stromab des Beginns der Heizwendel liegt, wird er jedenfalls stärker erhitzt. Hinzu kommt, dass der zweite Befestigungspunkt mangels Erwärmung durch die Heizwendel quasi "gekühlt" wird, und zwar hinsichtlich des Wärmeflusses, der über den ersten Befestigungspunkt in den Träger eingeleitet und über den zweiten Befestigungspunkt in das Durchflussrohr abgeleitet werden kann. Damit wird der zweite Befestigungspunkt länger kühl gehalten, selbst wenn die Heizwendel eingeschaltet ist und kein Wasserfluss erfolgt. Der Temperaturüberschwinger der Heizwendel erreicht also die Schmelzsicherung infolge der "Kühlung" des zweiten Befestigungspunkts bestenfalls abgemildert. Ist der Temperaturregler defekt und die Schmelzsicherung muss die Heizung abschalten, wird der zweite Befestigungspunkt nach Überschreiten einer Ansprechtemperatur des Temperaturreglers nicht mehr so stark "gekühlt". Da bei Erreichen der Ansprechtemperatur das Restwasser bereits verdampft ist, kein Wasserzufluss mehr erfolgt und ein Wärmeeintrag folglich über beide Befestigungspunkte stattfindet, steigt die Temperatur an der Schmelzsicherung ebenfalls schnell an, so dass sie die Heizung ausschaltet. Erfindungsgemäß kann also lediglich durch geschickte Anordnung bzw. Montage und Wahl der beiden Befestigungspunkte des gemeinsamen Trägers von Temperaturregler und Schmelzsicherung dafür gesorgt werden, dass die Schmelzsicherung nicht bei jedem Trockenhochlauf zerstört wird. Damit kann für einen kostengünstigen und zuverlässigen Betrieb der Heißgetränkezubereitungseinrichtung gesorgt werden.

Alternativ oder zusätzlich zu einer geschickten Wahl der beiden Befestigungspunkte des Trägers am Durchflussrohr kann ein unterschiedlicher Wärmefluss ab dem ersten bzw. dem zweiten Befestigungspunkt auch konstruktiv unterstützt oder erreicht werden. Nach einer weiteren vorteilhaften Ausgestaltung der Erfindung kann der Träger über erste und zweite Stege verfügen, über die er jeweils mit den ersten und zweiten Befestigungspunkten am Durchflussrohr befestigt ist. Erfindungsgemäß kann der zweite Steg eine geringere Wärmekapazität bzw. einen größeren Wärmedurchgangswiderstand aufweisen als der erste Steg. Mit einem größeren Wärmedurchgangswiderstand des zweiten Stegs ist auch ein geringerer Wärmefluss vom zweiten Befestigungspunkt durch den Steg zur Schmelzsicherung zu erreichen.

Nach einer ersten Ausgestaltungsform kann der Wärmedurchgangswiderstand durch die Wahl eines geeigneten Materials erzielt werden. So kann der erste Steg aus einem Material ausgebildet sein, das einen geringeren Wärmedurchgangswiderstand aufweist als das Material des zweiten Stegs.

Bei der Wahl unterschiedlicher Materialien für die Stege kann der Träger insgesamt nicht mehr homogen bzw. aus demselben Material ausgebildet sein. Daher kann sich als alternative oder zusätzliche Maßnahme zum Erreichen eines unterschiedlichen Wärmeflusses nach einer weiteren vorteilhaften Ausgestaltung der Erfindung anbieten, den ersten Steg bei gleicher Länge mit einem geringeren Querschnitt zu versehen als den zweiten Steg. Aufgrund der geringeren Masse des ersten Stegs, die erhitzt werden muss, heizt sich der erste Steg dadurch schneller auf als der zweite Steg, so dass selbst bei gleichem Energieeintrag ab den Befestigungspunkten am Durchflussrohr der erste Steg schneller erhitzt und damit die Temperatur schneller zum Temperaturregler geleitet wird als über den zweiten Steg zur Schmelzsicherung. Alternativ oder zusätzlich kann der erste Steg an dem ersten Befestigungspunkt einen geringeren Abstand zum Durchflussrohr aufweisen bzw. kürzer ausgebildet sein als der zweite Steg am zweiten Befestigungspunkt. Der unterschiedliche Wärmefluss ausgehend von den beiden Befestigungspunkten lässt sich also konstruktiv durch unterschiedliche Abstände der Stege zum Durchflussrohr erzeugen

Schließlich können nach einer weiteren vorteilhaften Ausgestaltung der Erfindung die beiden Befestigungspunkte durch unterschiedliche Befestigungsarten ausgebildet werden, wobei die Befestigungsart des ersten Befestigungspunkts einen geringeren Wärmedurchgangswiderstand aufweist als die Befestigungsart des zweiten Befestigungspunkts. Als Befestigungsarten bieten sich beispielweise Löten, Verschweißen oder Verpressen an. Ihre unterschiedlichen Wärmedurchgangswiderstände lassen sich ebenfalls zur Bewirken eines unterschiedlichen Wärmeflusses nutzen.

Das Prinzip der Erfindung wird im Folgenden anhand einer Zeichnung beispielshalber noch näher erläutert. In der Zeichnung zeigen:
- Figur 1:: eine Draufsicht auf einen Abschnitt eines Durchlauferhitzers,
- Figur 2:: eine Seitenansicht des Gegenstandes der Figur 1.

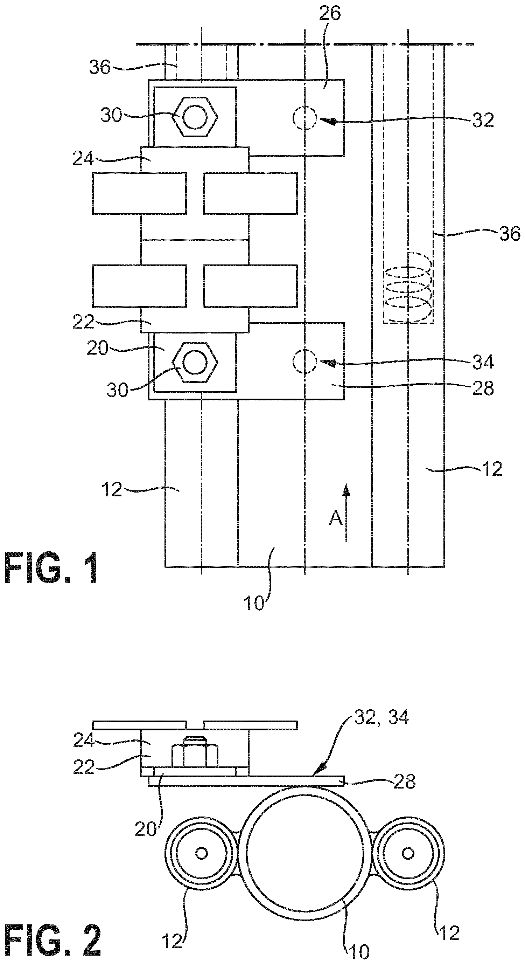

Figur 1 zeigt eine Draufsicht auf den Anfangsbereich eines Durchlauferhitzers, der sich aus einem mittigen Durchflussrohr 10 und zwei rechts und links parallel verlaufenden und wärmeleitend daran angeschlossenen rohrförmigen Heizkörpern 12 zusammensetzt. Durch das Durchflussrohr 10 wird das zu erhitzende Wasser in eine Strömungsrichtung A geleitet. Oberseitig auf dem Durchflussrohr 10 sind zwei Stege 26, 28 angebracht, auf denen ein in Richtung des Durchflussrohrs 10 verlaufender Träger 20 mittels Schrauben 30 aufgeschraubt ist. Auf dem Träger 20 sind eine Schmelzsicherung 22 und ein Temperaturregler 24 nebeneinander befestigt. Der Steg 26 ist an einem ersten Befestigungspunkt 32, der Steg 28 an einem zweiten Befestigungspunkt 34 auf dem Durchflussrohr 10 verlötet. Der erste Befestigungspunkt 32 und der zweite Befestigungspunkt 34 stellen einen wärmeleitenden Anbindungspunkt zwischen dem Durchflussrohr 10 einerseits und dem Träger 20 andererseits her und damit zwischen dem Durchflussrohr 10 und dem Temperaturregler 24 bzw. der Schmelzsicherung 22. Der Temperaturregler 24 ist dem ersten Befestigungspunkt 32 und die Schmelzsicherung 22 dem zweiten Befestigungspunkt 34 näher angeordnet. In den beiden Heizkörpern 12 ist jeweils eine Heizwendel 36 untergebracht, die jeweils in etwa stromab des Stegs 28 bzw. des zweiten Befestigungspunktes 34 beginnen und sich stromab in dem Heizkörper 12 erstrecken. Der zweite Befestigungspunkt 34 ist also so gewählt, dass er in Stromrichtung A betrachtet stromauf des Beginns der Heizwendeln 36 liegt.

Im Betrieb des Durchlauferhitzers durchströmt zunächst kühles Wasser das Durchflussrohr 10 in der Stromrichtung A. Da die Heizwendeln 36 stromab des zweiten Befestigungspunktes 34 bzw. stromab des Stegs 26 beginnen, ist die Manteltemperatur des Durchflussrohrs 10 an der Stelle des zweiten Befestigungspunktes 34 regelmäßig geringer bzw. kühler als am zweiten Befestigungspunkt 32 bzw. auf Höhe des Stegs 26. Da der Temperaturregler 24 dem ersten Befestigungspunkt 32 näher als die Schmelzsicherung 22 montiert ist, erreicht die Schmelzsicherung 22 im Betrieb des Durchlauferhitzers regelmäßig eine geringere Temperaturlast als den Temperaturregler 24.

Im Betrieb der Heißgetränkezubereitungseinrichtung soll der Temperaturregler 24 insbesondere einen Trockenhochlauf der Heizwendeln 36 vermeiden, also einen Zustand, bei dem die Heizwendeln 36 mit Strom beaufschlagt sind, aber kein Wasserfluss durch das Durchflussrohr 10 stattfindet. Bei einer vorbestimmten Ansprechtemperatur unterbricht der Temperaturregler 24 die Stromversorgung der Heizwendeln 36.

Sollte der Temperaturregler 24 defekt sein und daher keine Abschaltung vornehmen, soll die Schmelzsicherung 22 bei Ausfall des Temperaturreglers 24 die Heizung abschalten, um Schäden an der Heißgetränkezubereitungseinrichtung zu vermeiden. Andererseits soll im Falle eines Trockenhochlaufs und bei Ansprechen des Temperaturreglers 24 die Schmelzsicherung 22 nicht beschädigt werden, sondern nur auslösen, falls der Temperaturregler 24 ausfällt.

Bei einem Trockenhochlauf bei intaktem Temperaturregler 24 erhitzt die Heizwendel 36 den Heizkörper 12, ohne dass ein Wasserdurchfluss im Durchflussrohr 10 stattfindet. Daraufhin steigt die Temperatur im Steg 26 stärker an als im Steg 28, weil der Steg 28 in einem Bereich einer größeren unbeheizten Masse des Durchflussrohres 10 liegt als der Steg 26 bzw. der erste Befestigungspunkt 32. Wegen der im Übrigen symmetrischen Anordnung der Stege 26, 28 und des Trägers 20 erhitzt sich der Temperaturregler 24 schneller als die Schmelzsicherung 22. Bei intaktem Temperaturregler 24 spricht er folglich vor der Aktivierung der Schmelzsicherung 22 an und schaltet die Heizung ab. Zudem erreicht der Temperaturüberschwinger der Heizkörper 12 die Schmelzsicherung 22 nur abgemildert, weil sie durch den Steg 28 und den zweiten Befestigungspunkt 34 in einem weniger beheizten bzw. "besser gekühlten" Bereich des Durchflussrohres 10 liegt.

Ist der Temperaturregler 24 defekt, heizen die Heizwendeln 36 weiter auf, so dass die eigentliche Ansprechtemperatur des Temperaturreglers 24 überschritten wird. Die steigende Temperatur wird in dem gut leitenden Material des Durchflussrohrs 10 mangels kühlenden Wassers auch in eine Richtung entgegen der Durchflussrichtung A und damit zum zweiten Befestigungspunkt 34 geleitet. Folglich wird der Steg 28 ebenfalls stärker erwärmt, so dass ein stärkerer Wärmeeintrag über ihn auch zur Schmelzsicherung 22 erfolgt. Damit steigt die Temperatur auch an der Schmelzsicherung 22 stark an, so dass sie aktiviert wird und die Heizung abschaltet. Damit kann ein temperaturbedingter Schaden an der Heißgetränkezubereitungseinrichtung verhindert werden. Durch den konstruktiv unterschiedlichen Wärmefluss zwischen dem Steg 26 einerseits und dem Steg 28 andererseits ist jedoch gewährleistet, dass insbesondere bei einem Trockenhochlauf zunächst der Temperaturregler 24 mit einer höheren Temperatur beaufschlagt wird, ohne dass die Schmelzsicherung 22 auslöst. Erst bei Ausfall des Temperaturreglers 24 wird die Schmelzsicherung 22 aktiviert.

Da es sich bei dem vorhergehenden, detailliert beschriebenen Durchlauferhitzer um ein Ausführungsbeispiel handelt, kann er in üblicher Weise vom Fachmann in einem weiten Umfang modifiziert werden, ohne den Bereich der Erfindung zu verlassen. Insbesondere können auch die konkreten Ausgestaltungen der Stege, Schrauben und Befestigungspunkte in anderer Form als in der hier beschriebenen erfolgen. Ebenso kann der Träger in einer anderen Form ausgestaltet werden, wenn dies aus Platzgründen bzw. designerischen Gründen notwendig ist.

### Bezugszeichenliste

- 10: Durchflussrohr
- 12: Heizkörper
- 20: Träger
- 22: Schmelzsicherung
- 24: Temperaturregler
- 26: Steg
- 28: Steg
- 30: Befestigungsschraube
- 32: erster Befestigungspunkt
- 34: zweiter Befestigungspunkt
- 36: Heizwendel
- A: Strömungsrichtung des Wassers

## Patentansprüche

1. Durchlauferhitzer für eine Heißgetränkezubereitungseinrichtung für Haushaltszwecke mit einem wärmeleitenden Durchflussrohr (10), mit mindestens einer an dem Durchflussrohr (10) wärmeleitend verbundenen und parallel verlaufenden Heizwendel (36), mit einem wärmeleitenden Träger (20), der wärmeleitend über einen Befestigungspunkt (32) am Durchlaufrohr (10) befestigt ist, mit einem Temperaturregler (24) und mit einer Schmelzsicherung (22) auf dem Träger (20), **dadurch gekennzeichnet,**
- **dass** der Temperaturregler (24) dem Befestigungspunkt (32) näher angeordnet ist als die Schmelzsicherung (22) und
- **dass** im Betrieb des Durchlauferhitzers der Wärmefluss zum Temperaturregler (24) größer ist als zur Schmelzsicherung (22).

2. Durchlauferhitzer nach Anspruch 1, **dadurch gekennzeichnet, dass** der Träger (20) über zwei Befestigungspunkte (32; 34) am Durchlaufrohr (10) befestigt ist, der Temperaturregler (24) einem ersten Befestigungspunkt (32) und die Schmelzsicherung (22) einem zweiten Befestigungspunkt (34) näher angeordnet ist und der zweite Befestigungspunkt (34) stromauf des ersten Befestigungspunkts (32) liegt.

3. Durchlauferhitzer nach Anspruch 2, **dadurch gekennzeichnet, dass** der zweite Befestigungspunkt (34) im Bereich oder stromauf eines Beginns der Heizwendel (36) liegt.

4. Durchlauferhitzer nach Anspruch 2 oder 3, **dadurch gekennzeichnet, dass** der Träger (20) über erste und zweite Stege (26; 28) an den Befestigungspunkten (32; 34) befestigt ist und der erste Steg (26) eine geringere Wärmekapazität als der zweite Steg (28) aufweist.

5. Durchlauferhitzer nach einem der Ansprüche 2 bis 4, **dadurch gekennzeichnet, dass** die Stege (26; 28) aus unterschiedlichen Materialien ausgebildet sind und das Material des ersten Stegs (26) eine geringere Wärmekapazität als das Material des zweiten Steg (28) aufweist.

6. Durchlauferhitzer nach einem der Ansprüche 2 bis 5, **gekennzeichnet durch** einen geringeren Querschnitts des ersten Stegs (26) gegenüber dem zweiten Steg (28).

7. Durchlauferhitzer nach einem der Ansprüche 2 bis 6, **dadurch gekennzeichnet, dass** der erste Steg (26) am ersten Befestigungspunkt (32) einen geringeren Abstand zum Durchflussrohr (10) aufweist als der zweite Steg (28) am zweiten Befestigungspunkt (34).

8. Durchlauferhitzer nach einem der Ansprüche 2 bis 7, **dadurch gekennzeichnet, dass** die beiden Befestigungspunkten (32; 34) durch unterschiedliche Befestigungsarten ausgebildet werden, wobei die Befestigungsart des ersten Befestigungspunkts (32) einen geringeren Wärmedurchgangswiderstand aufweist als die Befestigungsart des zweiten Befestigungspunkts (34).

## Claims

1. Instantaneous water heater for a hot beverage preparation device for domestic purposes, having a heat-conducting flow tube (10), having at least one heating coil (36) connected in a heat-conducting manner to the flow tube (10) and running in parallel thereto, having a heat-conducting support (20), which is fastened in a heat-conducting manner via a fastening point (32) to the flow tube (10), having a temperature regulator (24) and having a safety fuse (22) on the support (20), **characterised in that**
- the temperature regulator (24) is arranged closer to the fastening point (32) than the safety fuse (22) and
- during operation of the instantaneous water heat the flow of heat to the temperature regulator (24) is greater than to the safety fuse (22).

2. Instantaneous water heater according to claim 1, **characterised in that** the support (20) is fastened via two fastening points (32; 34) to the flow tube (10), the temperature regulator (24) is arranged closer to the first fastening point (32) and the safety fuse (22) is arranged closer to a second fastening point (34) and the second fastening point (34) is disposed upstream of the first fastening point (32).

3. Instantaneous water heater according to claim 2, **characterised in that** the second fastening point (34) is disposed in the region or upstream of a start of the heating coil (36).

4. Instantaneous water heater according to claim 2 or 3, **characterised in that** the support (20) is fastened via first and second webs (26; 28) to the fastening points (32; 34) and the first web (26) has a lower thermal capacitance than the second web (28).

5. Instantaneous water heater according to one of claims 2 to 4, **characterised in that** the webs (26; 28) are embodied from different materials and the material of the first web (26) has a lower thermal capacitance than the material of the second web (28).

6. Instantaneous water heater according to one of claims 2 to 5, **characterised by** a smaller cross-section of the first web (26) compared with the second web (28).

7. Instantaneous water heater according to one of claims 2 to 6, **characterised in that** the first web (26) at the first fastening point (32) has a smaller distance from the flow tube (10) than the second web (28) at the second fastening point (34).

8. Instantaneous water heater according to one of claims 2 to 7, **characterised in that** the two fastening points (32; 34) are embodied by different types of fastening, wherein the type of fastening of the first fastening point (32) has a lower heat transfer resistance than the type of fastening of the second fastening point (34).

## Revendications

1. Chauffe-eau instantané pour un dispositif de préparation de boissons chaudes à usage domestique, comprenant un tube d'écoulement (10), comprenant au moins un serpentin de chauffage (36) raccordé au tube d'écoulement (10) de manière conductrice de chaleur et s'y étendant parallèlement, comprenant un support (20) conducteur de chaleur, lequel est fixé sur le tube d'écoulement (10) de manière conductrice de chaleur par l'intermédiaire d'un point de fixation (32), comprenant un régulateur de température (24) et un fusible (22) sur le support (20), **caractérisé**
- **en ce que** le régulateur de température (24) est disposé plus près du point de fixation (32) que le fusible (22), et
- **en ce que** pendant le fonctionnement du chauffe-eau instantané, le flux de chaleur vers le régulateur de température (24) est plus grand que vers le fusible (22).

2. Chauffe-eau instantané selon la revendication 1, **caractérisé en ce que** le support (20) est fixé sur le tube d'écoulement (10) par deux points de fixation (32 ; 34), **en ce que** le régulateur de température (24) est disposé plus près d'un premier point de fixation (32) et **en ce que** le fusible (22) est disposé plus près d'un deuxième point de fixation (34), et **en ce que** le deuxième point de fixation (34) est situé en amont du premier point de fixation (32).

3. Chauffe-eau instantané selon la revendication 2, **caractérisé en ce que** le deuxième point de fixation (34) est situé au niveau ou en amont d'un début du serpentin de chauffage (36).

4. Chauffe-eau instantané selon la revendication 2 ou 3, **caractérisé en ce que** le support (20) est fixé sur les points de fixation (32 ; 34) par l'intermédiaire de premières et de deuxièmes nervures (26 ; 28), et **en ce que** la première nervure (26) présente une capacité thermique plus petite que la deuxième nervure (28).

5. Chauffe-eau instantané selon l'une quelconque des revendications 2 à 4, **caractérisé en ce que** les nervures (26 ; 28) sont réalisées dans différentes matières et **en ce que** la matière de la première nervure (26) présente une capacité thermique plus petite que la matière de la deuxième nervure (28).

6. Chauffe-eau instantané selon l'une quelconque des revendications 2 à 5, **caractérisé par** une section de la première nervure (26) plus petite par rapport à la deuxième nervure(28) .

7. Chauffe-eau instantané selon l'une quelconque des revendications 2 à 6, **caractérisé en ce que** la première nervure (26) sur le premier point de fixation (32) présente un écart plus petit par rapport au tube d'écoulement (10) que la deuxième nervure (28) sur le deuxième point de fixation (34).

8. Chauffe-eau instantané selon l'une quelconque des revendications 2 à 7, **caractérisé en ce que** les deux points de fixation (32 ; 34) sont réalisés par différents types de fixation, le type de fixation du premier point de fixation (32) présentant une résistance thermique plus petite que le type de fixation du deuxième point de fixation (34).
